# EUROPÄISCHE PATENTSCHRIFT

(11) **EP 2 997 329 B1**
(45) Veröffentlichungstag und Bekanntmachung des Hinweises auf die Patenterteilung: **06.02.2019**
(21) Anmeldenummer: 14721383.9
(22) Anmeldetag: 05.05.2014
(51) Int. Cl.: G01C 19/5712

(54) **DREHRATENSENSOR UND VERFAHREN ZUM BETRIEB EINES DREHRATENSENSORS**
YAW RATE SENSOR AND A METHOD FOR OPERATING A YAW RATE SENSOR
CAPTEUR DE VITESSE DE ROTATION ET PROCÉDÉ DE FONCTIONNEMENT D'UN CAPTEUR DE VITESSE DE ROTATION

(30) Priorität: 14.05.2013 DE 102013208828
(43) Veröffentlichungstag der Anmeldung: 23.03.2016
(73) Patentinhaber: Robert Bosch GmbH, 70442 Stuttgart (DE)
(72) Erfinder: SCHEBEN, Rolf, 70499 Stuttgart (DE); MAUL, Robert, 75181 Pforzheim (DE); KUHLMANN, Burkhard, 72762 Reutlingen (DE); HATTASS, Mirko, 70191 Stuttgart (DE); BALSLINK, Thorsten, 72138 Kirchentellinsfurt (DE); SCHMIDT, Benjamin, 70499 Stuttgart (DE); AMELING, Ralf, 73434 Aalen (DE)
(86) Internationale Anmeldenummer: PCT/EP2014/059064
(87) Internationale Veröffentlichungsnummer: WO 2014/184026

(56) Entgegenhaltungen:
- EP-A1- 2 527 789
- DE-A1-102009 027 897
- DE-A1-102010 062 095

## Beschreibung

### Stand der Technik

Die Erfindung geht von bekannten Drehratensensoren aus.

Beispielsweise sind mikromechanische Drehratensensoren bekannt, die eine Drehrate des Drehratensensors detektieren. Solche Drehratensensoren bestehen üblicherweise aus zwei schwingfähigen Massen, welche auch Corioliselemente oder Teilschwinger genannt werden. Die Teilschwinger werden beispielsweise zu einer antiparallelen bzw. gegenphasigen Antriebsmode angetrieben, wobei bei einem mit einer Drehrate beaufschlagter Drehratensensor durch Corioliskräfte eine antiparallele oder gegenphasige Detektionsschwingungen der Teilschwinger angeregt werden. Die Detektionsschwingungen der Teilschwinger werden kapazitiv erfasst und mittels einer Auswerteelektronik ein Drehratensignal erzeugt. Die Antriebsschwingung oder Detektionsschwingung der Teilschwinger solcher Drehratensensoren kann beispielsweise eine Linearschwingung oder eine Rotationsschwingung sein, wobei die Teilschwinger im Falle einer Rotationsschwingung auch Rotationselemente genannt werden.

Solche bekannten Drehratensensoren besitzen jedoch neben den antiparallelen bzw. gegenphasigen Antriebsmoden und/oder Detektionsmoden zusätzlich eine vergleichsweise hohe Anzahl an Störmoden, welche die Detektion von Drehratesignalen stören können.

Aus dem Dokument DE 10 2010 062 095 A1 ist ein Drehratensensor mit einem ersten und einem zweiten Rotationselement bekannt, welche über eine Wippenstruktur gekoppelt sind.

Die bekannten Drehratensensoren weisen eine vergleichsweise hohe Anzahl an mikromechanischen Komponenten auf, was die Herstellung, insbesondere von mehrkanaligen Drehratensensoren, solcher mikromechanischen Drehratensensoren kompliziert und teuer macht.

### Offenbarung der Erfindung

Es ist daher Aufgabe der vorliegenden Erfindung, einen Drehratensensor und ein Verfahren zum Betrieb eines Drehratensensors zur Verfügung zu stellen, welche die Nachteile des Standes der Technik nicht aufweisen und unempfindlich gegenüber Störbeschleunigungen sind, wenige Störmoden aufweisen und deren Herstellung vereinfacht ist.

Der erfindungsgemäße Drehratensensor und das erfindungsgemäße Verfahren zum Betrieb eines Drehratensensors gemäß den unabhängigen Ansprüchen 1 und 8 haben gegenüber dem Stand der Technik den Vorteil, dass durch die Kopplung der Antriebsstruktur mit dem ersten Rotationselement und mit dem zweiten Rotationselement eine gegenphasige Antriebsmode der ersten Rotationsschwingung und der zweiten Rotationsschwingung erzeugt wird, wobei durch eine derartige Kopplung der Rotationselemente die Anzahl an Störmoden reduziert wird. Insbesondere ist es vorteilhaft möglich, nur eine einzige Antriebsstruktur für einen rotatorischen Drehratensensor bereitzustellen, sodass die Sensorstruktur und deren Herstellung vereinfacht werden. Insbesondere weist der Drehratensensor ein Substrat mit einer zur Antriebsebene parallelen Haupterstreckungsebene auf, wobei eine Rotationsachse einer zu detektierenden Drehrate parallel zur Haupterstreckungsebene oder Antriebsebene angeordnet ist. Die zur Rotationsachse der zu detektierenden Drehrate parallele Richtung wird auch als erste Richtung oder Y-Richtung bezeichnet. Besonders bevorzugt sind die beiden Rotationselemente jeweils plattenförmig und/oder massensymmetrisch zueinander ausgebildet. Weiterhin wird eine erste Detektionsschwingung des ersten Rotationselements als Abweichung von der ersten Rotationsschwingung und eine zweite Detektionsschwingung des zweiten Rotationselements als Abweichung von der zweiten Rotationsschwingung mittels einer Detektionseinrichtung, beispielsweise kapazitiv, detektiert. Bevorzugt sind das erste Rotationselement und das zweite Rotationselement in eine zur Antriebsebene oder Haupterstreckungsebene senkrechte Detektionsrichtung bewegbar angeordnet, wobei eine Detektionsmode der ersten und zweiten Detektionsschwingung insbesondere gegenphasig ist. Insbesondere weisen das erste und zweite Rotationselement jeweils zwei Freiheitsgrade auf, insbesondere einen ersten Freiheitsgrad einer Antriebsschwingung um eine zur Antriebsebene senkrechte dritte Richtung, welche auch als Z-Richtung bezeichnet wird, und einen zweiten Freiheitsgrad einer Detektionsschwingung um eine zur Antriebsebene parallelen und zur Rotationsachse senkrechte zweite Richtung, welche auch als X-Richtung bezeichnet wird. Die erste Rotationsschwingung und die zweite Rotationsschwingung werden hier auch zusammenfassend als Rotationsschwingung oder Antriebsschwingung bezeichnet. Insbesondere wird die erste Detektionsschwingung und die zweite Detektionsschwingung zusammenfassend auch als Detektionsschwingung bezeichnet. Bevorzugt sind das erste Rotationselement und das zweite Rotationselement derart mit der Antriebsstruktur gekoppelt, dass im Wesentlichen nur die Antriebsschwingungen und die Detektionsschwingungen antreibbar sind.

Vorteilhafte Ausgestaltungen und Weiterbildungen der Erfindung sind den Unteransprüchen, sowie der Beschreibung unter Bezugnahme auf die Zeichnungen entnehmbar.

Gemäß der Erfindung ist die Antriebsstruktur entlang einer Antriebsrichtung linear beweglich angeordnet, wobei die Antriebsstruktur als ein das erste Rotationselement und das zweite Rotationselement vollständig umgebender Antriebsrahmen ausgebildet ist, wobei die Antriebsstruktur insbesondere derart mit dem ersten Rotationselement und mit dem zweiten Rotationselement gekoppelt ist, dass mittels einer Linearbewegung der Antriebsstruktur entlang der Antriebsrichtung das erste Rotationselement und das zweite Rotationselement gegensinnig zueinander angetrieben werden. Hierdurch ist es vorteilhaft möglich, das erste Rotationselement und das zweite Rotationselement mittels eines, insbesondere einzigen, Antriebsrahmens zu den Rotationsschwingungen bzw. Antriebsschwingungen gegensinnig anzutreiben, sodass insbesondere auf eine weitere Antriebsstruktur verzichtet werden kann. Durch die Kopplung des ersten Rotationselements und des zweiten Rotationselements mittels der Antriebsstruktur werden vorteilhaft vergleichsweise viele Störmoden unterdrückt. Insbesondere sind das erste Rotationselement und das zweite Rotationselement an gegenüberliegenden Enden, insbesondere in einem Randbereich, mit der Antriebsstruktur gekoppelt.

Gemäß einer bevorzugten Weiterbildung ist das erste Rotationselement mit einem ersten Ankerelement des Substrats, insbesondere über ein erstes Rückstellelement, gekoppelt und das zweite Rotationselement mit einem zweiten Ankerelement des Substrats, insbesondere über ein zweites Rückstellelement, gekoppelt, wobei die Antriebsstruktur über ein erstes Koppelelement mit dem ersten Rotationselement gekoppelt ist, wobei die Antriebsstruktur über ein zweites Koppelelement mit dem zweiten Rotationselement gekoppelt ist, wobei insbesondere das erste Rotationselement im Bereich des ersten Rotationszentrums eine das erste Ankerelement vollständig oder teilweise umgebende erste Ausnehmung aufweist, wobei insbesondere das zweite Rotationselement im Bereich des zweiten Rotationszentrums eine das zweite Ankerelement vollständig oder teilweise umgebende zweite Ausnehmung aufweist. Hierdurch ist es vorteilhaft möglich durch eine lineare Antriebsbewegung der Antriebsstruktur die Rotationsschwingung der Rotationselemente zu erzeugen. Dies wird insbesondere dadurch erreicht, dass das erste Koppelelement und das erste Ankerelement, und insbesondere das erste Rückstellelement in einer Ruhestellung oder Gleichgewichtslage des Rotationselements entlang einer zur Rotationsachse des Drehratensensors senkrechte, insbesondere X- oder zweite, Richtung angeordnet sind. Somit wird durch eine Linearschwingung der Antriebsstruktur eine Anbindungsstelle des ersten Koppelelements an das erste Rotationselement relativ zu einer weiteren Anbindungsstelle des Ankerelements an das erste Rotationselement parallel zur Rotationsachse, insbesondere in die erste (Y-)Richtung, verschoben. Dadurch wird die erste Rotationsschwingung erzeugt. Gleiches gilt entsprechend für das zweite Rotationselement, wobei alle genannten Bauteile entlang einer gemeinsamen Gerade angeordnet sind.

Gemäß der Erfindung sind das erste Rotationselement und das zweite Rotationselement über eine Wippenstruktur miteinander gekoppelt, wobei die Wippenstruktur insbesondere eine Wippendrehachse aufweist, wobei die Wippendrehachse insbesondere parallel zur Rotationsachse angeordnet ist. Hierdurch ist es vorteilhaft möglich, weitere Störmoden zu unterdrücken. Besonders vorteilhaft wird durch die Kopplung des ersten Rotationselements und des zweiten Rotationselements über die Wippenstruktur eine gleichphasige Detektionsmode unterdrückt. Weiterhin werden durch die Wippenstruktur die störenden gleichphasigen Detektionsmoden zu höheren Frequenzen verschoben.

Gemäß einer bevorzugten Weiterbildung sind das erste Rotationselement und das zweite Rotationselement nur über die Antriebsstruktur und die Wippenstruktur oder nur über die Antriebsstruktur, die Wippenstruktur und ein Substrat des Drehratensensors miteinander gekoppelt. Hierdurch werden die Anzahl der Federn und damit die Anzahl der Störmoden gegenüber dem Stand der Technik verringert. Weiterhin wird durch die Kopplung des ersten Rotationselements und des zweiten Rotationselements über die Wippenstruktur eine gleichphasige Detektionsmode unterdrückt. Weiterhin werden durch die Wippenstruktur die störenden gleichphasigen Detektionsmoden zu höheren Frequenzen verschoben.

Gemäß einer bevorzugten Weiterbildung ist die Antriebsrichtung der Antriebsstruktur parallel zur Rotationsachse angeordnet oder die Antriebsrichtung schließt mit der Rotationsachse einen Scheitelwinkel ein, wobei insbesondere der Scheitelwinkel ausgehend von der Rotationsachse in Richtung der Antriebsrichtung bevorzugt zwischen 0 Grad und 90 Grad beträgt, besonders bevorzugt zwischen 30 Grad und 60 Grad beträgt, ganz besonders bevorzugt 45 Grad beträgt. Durch die Einstellung des Scheitelwinkels auf 45 Grad ist es vorteilhaft möglich zwei Drehraten um zwei zueinander orthogonale Rotationsachsen mittels zwei, insbesondere auf einem gemeinsamen Substrat angeordneten, Drehratensensoren zu detektieren und gleichzeitig sämtliche Rotationselemente der beiden Drehratensensoren mit einer einzigen Antriebsstruktur anzutreiben. Weiterhin ist es vorteilhaft möglich, die Antriebsstruktur mit dem ersten Rotationselement über ein erstes Umlenkmittel und das zweite Rotationselement über ein zweites Umlenkmittel jeweils mit der Antriebsstruktur zu koppeln. Das erste Umlenkmittel und das zweite Umlenkmittel sind insbesondere konfiguriert, eine von der Antriebsstruktur herrührende Antriebskraft entlang der Antriebsrichtung derart umzulenken, dass die beiden Rotationselemente jeweils die Rotationsschwingung oder Antriebsschwingung in der beschriebenen Weise ausführen.

Ein weiterer Gegenstand der vorliegenden Erfindung betrifft eine Drehratensensoranordnung mit mindestens zwei Drehratensensoren, wobei die Drehratensensoranordnung zur Detektion von mindestens zwei Drehraten um mindestens zwei unterschiedliche Rotationsachsen konfiguriert ist, wobei jeder Drehratensensor der mindestens zwei Drehratensensoren jeweils eine Antriebsstruktur aufweist, wobei die Antriebsstrukturen der mindestens zwei Drehratensensoren miteinander, insbesondere starr, gekoppelt sind. Hierdurch ist es vorteilhaft möglich mehrere Rotationsachsen zu detektieren, insbesondere eine Drehratensensoranordnung mit Detektionsempfindlichkeit bezüglich eine, zwei oder drei Rotationsachsen bereitzustellen und gleichzeitig mit einer einzigen Antriebsstruktur oder mittels einer einzigen Antriebsbewegung mehrerer miteinander gekoppelter Antriebsstrukturen bereitzustellen. Durch die Kopplung der Antriebsstrukturen oder durch die Bereitstellung einer einzigen Antriebsstruktur wird eine vereinfachte Drehratensensoranordnung bereitgestellt und die Anzahl der Federn und somit die Anzahl und Größe der Störmoden reduziert. Gemäß einer alternativen Ausführungsform sind die Antriebsstrukturen der zwei Drehratensensoren zu einer gegenphasigen Antriebsschwingung antreibbar angeordnet.

Gemäß einer bevorzugten Weiterbildung des erfindungsgemäßen Verfahrens wird die Antriebsstruktur entlang einer Antriebsrichtung zur Erzeugung der gegenphasige Antriebsmode der ersten Rotationsschwingung und der zweiten Rotationsschwingung linear bewegt. Hierdurch ist es möglich, durch die Kopplung der Antriebsstruktur mit dem ersten Rotationselement und dem zweiten Rotationselement die Rotationsschwingung oder Antriebsschwingung des jeweiligen Rotationselements zu erzeugen. Hierdurch werden Kopplungsfedern eingespart und gleichzeitig die Anzahl der Störmoden reduziert.

Gemäß einer bevorzugten Weiterbildung wird am ersten Rotationselement im Bereich des ersten Rotationszentrums eine Ausnehmung zur Verankerung mit einem Substrat des Drehratensensors angeordnet, wobei am zweiten Rotationselement im Bereich des zweiten Rotationszentrums eine Ausnehmung zur Verankerung mit einem Substrat des Drehratensensors angeordnet wird. Hierdurch ist es vorteilhaft möglich, in den jeweiligen Rotationszentren mit dem Substrat verankerte Rotationselemente bereitzustellen, sodass insbesondere eine gegenphasige Antriebsschwingung der Rotationselemente antreibbar ist. Gleichzeitig können hierdurch Federn eingespart werden und Störmoden unterdrückt werden.

Gemäß der Erfindung werden das erste Rotationselement und das zweite Rotationselement über eine Wippenstruktur miteinander gekoppelt, wobei eine Wippendrehachse der Wippenstruktur parallel zur Rotationsachse angeordnet wird, wobei mittels der Wippenstruktur eine gegenphasige Detektionsmode einer ersten Detektionsschwingung des ersten Rotationselements und einer zweiten Detektionsschwingung des zweiten Rotationselements erzeugt wird. Hierdurch ist es vorteilhaft möglich, weitere Störmoden zu unterdrücken. Besonders vorteilhaft wird durch die Kopplung des ersten Rotationselements und des zweiten Rotationselements über die Wippenstruktur eine gleichphasige Detektionsmode unterdrückt. Weiterhin werden durch die Wippenstruktur die störenden gleichphasigen Detektionsmoden zu höheren Frequenzen verschoben.

Gemäß einer bevorzugten Weiterbildung werden das erste Rotationselement und das zweite Rotationselement nur über die Antriebsstruktur und die Wippenstruktur oder nur über die Antriebsstruktur, die Wippenstruktur und ein Substrat des Drehratensensors miteinander gekoppelt. Hierdurch ist es vorteilhaft möglich, die Antriebsbewegung oder Antriebsschwingung - d.h. die erste Rotationsschwingung und die zweite Rotationsschwingung - des ersten und zweiten Rotationselements nur über die Antriebsstruktur oder den äußeren Antriebsrahmen miteinander zu koppeln. Hierdurch werden die Anzahl der Federn und damit die Anzahl der Störmoden gegenüber dem Stand der Technik verringert. Weiterhin wird durch die Kopplung des ersten Rotationselements und des zweiten Rotationselements über die Wippenstruktur eine gleichphasige Detektionsmode unterdrückt. Weiterhin werden durch die Wippenstruktur die störenden gleichphasigen Detektionsmoden zu höheren Frequenzen verschoben.

Ausführungsbeispiele der vorliegenden Erfindung sind in den Zeichnungen dargestellt und in der nachfolgenden Beschreibung näher erläutert.

### Kurze Beschreibung der Zeichnungen

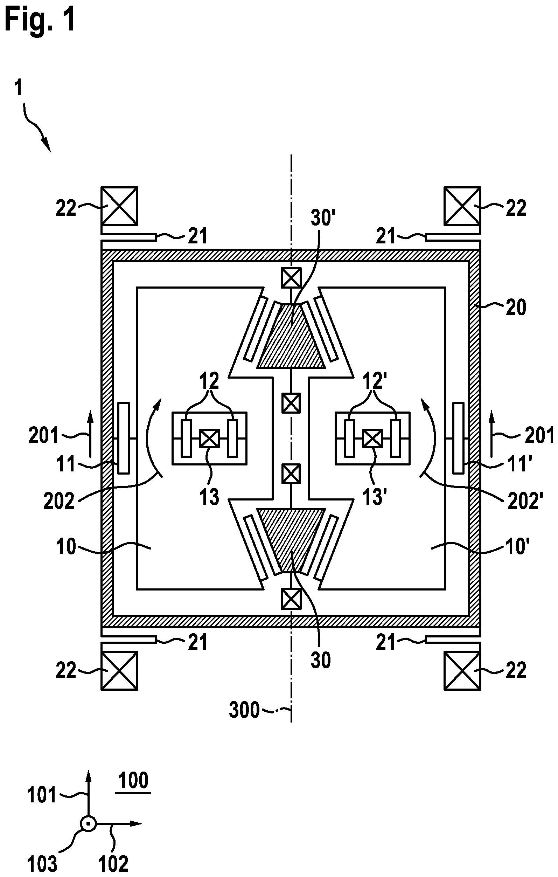

Es zeigen
**Figuren 1 bis 4** schematisch beispielhafte Ausführungsformen des erfindungsgemäßen Drehratensensors.

### Ausführungsform(en) der Erfindung

In den verschiedenen Figuren sind gleiche Teile stets mit den gleichen Bezugszeichen versehen und werden daher in der Regel auch jeweils nur einmal benannt bzw. erwähnt.

**Figur 1** zeigt schematisch beispielhaft eine Ausführungsform des erfindungsgemäßen Drehratensensors 1. Der Drehratensensor 1 ist zur Detektion einer Rotationsbewegung des Drehratensensors 1 um eine Rotationsachse 300 konfiguriert, wobei sich die Rotationsachse 300 innerhalb einer Antriebsebene 100 des Drehratensensors 1 erstreckt. Insbesondere weist der Drehratensensor ein Substrat mit einer parallel zur Antriebsebene (100) angeordneten Haupterstreckungsebene (100) auf. Der Drehratensensor 1 weist ein erstes Rotationselement 10, ein zweites Rotationselement 10' und eine parallel zur Antriebsebene 100 bewegbare Antriebsstruktur 20 auf.

Das erste Rotationselement 10 ist um ein erstes Rotationszentrum 13 zu einer zur Antriebsebene 100 parallelen ersten Rotationsschwingung antreibbar und das zweite Rotationselement 10' ist um ein zweites Rotationszentrum 13' zu einer zur Antriebsebene 100 parallelen zweiten Rotationsschwingung antreibbar. Bevorzugt ist die erste Rotationsschwingung eine Rotationsbewegung des ersten Rotationselements 10 um eine sich senkrecht zur Antriebsebene 100 erstreckende erste Drehachse, welche durch das erste Rotationszentrum 13 verläuft. Insbesondere verläuft entsprechend eine zweite Drehachse parallel zur ersten Drehachse durch das zweite Rotationszentrum 13' des zweiten Rotationselements 10'. Insbesondere ist das erste Rotationselement 13 in dem Bereich des ersten Rotationszentrums 13 mit dem Substrat des Drehratensensors 1 derart verbunden und/oder verankert, dass das erste Rotationselement 10 zu der ersten Rotationsschwingung um die erste Drehachse antreibbar ist. Insbesondere ist das zweite Rotationselement 10' im Bereich des zweiten Rotationszentrums 13' mit dem Substrat verbunden und/oder verankert und um die zweite Drehachse antreibbar. Hier sind die beiden Rotationselemente 10, 10' jeweils plattenförmig ausgebildet und weisen in den Bereichen ihrer Rotationszentren, welche insbesondere die jeweiligen Massenschwerpunkte sind, jeweils eine erste bzw. zweite Ausnehmung auf. Hier ist in einer ersten Ausnehmung des ersten Rotationselements 10 ein mit dem Substrat ortsfest gekoppeltes Ankerelement 13 angeordnet, welches über mindestens ein Rückstellelement 12, insbesondere zwei Rückstellelemente 12, an gegenüberliegenden Seiten des Ankerelements 13 mit dem ersten Rotationselement 10 elastisch gekoppelt ist. Insbesondere sind die zwei Rückstellelemente 12 jeweils als Koppelfedern ausgebildet. Das zweite Rotationselement 10' ist hier bezüglich Form und Massenverteilung gleichartig und bezüglich der Rotationsachse 300 spiegelsymmetrisch zum ersten Rotationselement 10 ausgebildet und/oder auf dem Substrat angeordnet.

Gemäß der Erfindung ist die Antriebsstruktur 20 ein entlang einer Antriebsrichtung 201 linear bewegbarer Antriebsrahmen 20, welcher das erste Rotationselement 10 und das zweite Rotationselement 10' vollständig umgibt. Hier ist der Antriebsrahmen 20 als ein die beiden Rotationselemente 10, 10' umgebender, sich im Wesentlichen parallel zur Antriebsebene 100 erstreckender, rechteckiger Antriebsrahmen 20 ausgebildet. In einer alternativen Ausführungsform ist der Antriebsrahmen 20 quadratisch ausgebildet. Bevorzugt ist die Antriebsstruktur an einer ersten Anbindungsstelle über ein erstes Koppelelement 11 mit dem ersten Rotationselement 10 und/oder an einer zweiten Anbindungsstelle über ein zweites Koppelelement 11' mit dem zweiten Rotationselement verbunden und/oder gekoppelt. Hier sind die beiden Anbindungsstellen entlang einer zur Rotationsachse 300 senkrechte Richtung an gegenüberliegenden Enden der beiden Rotationselemente 10, 10' angeordnet. Insbesondere sind das erste und zweite Koppelelement 11, 11' jeweils als elastische Federelemente ausgebildet. Hier ist die Antriebsstruktur 20 über Rückstellelemente 21 mit Ankerelementen 22 des Substrats des Drehratensensors gekoppelt, sodass die Antriebsstruktur 20 entlang einer Antriebsrichtung 201 zu einer Linearschwingung antreibbar ist. Die Antriebsstruktur 20 wird beispielsweise mittels Interdigitalstrukturen elektrostatisch angetrieben - hier parallel zur Y-Richtung 101 - und ist beispielsweise über die Ankerelemente 22 mit dem Substrat verbunden. Eine geradlinige als Linearschwingung bezeichnete Antriebsschwingung der Antriebsstruktur 20 wird durch das erste Koppelelement 11 und das zweite Koppelelement 11' auf die beiden Rotationselemente 10, 10' übertragen. Da die beiden Rotationselemente 10, 10' entlang einer zur Rotationsachse 300 senkrechte X-Richtung 102 an gegenüberliegenden Seiten bzw. an äußeren Anbindungsstellen an die Antriebsstruktur 20 angekoppelt sind und zugleich jeweils an einem weiter innenliegenden Punkt, welcher insbesondere das jeweilige Rotationszentrum 13 bzw. 13' ist, mittels Rückstellelementen 12 bzw. 12' über Ankerelemente 13 bzw. 13' an das Substrat angebunden sind, führen sie eine gegenphasige rotatorische Antriebsbewegung aus. Die erste bzw. zweite Drehachse der Antriebsschwingungen bzw. Rotationsschwingungen der jeweiligen Rotationselemente 10, 10' verläuft dabei parallel zur Z-Richtung. Die Antriebsschwingungen bzw. Rotationsschwingungen sind hier durch Pfeile 201, 201' dargestellt.

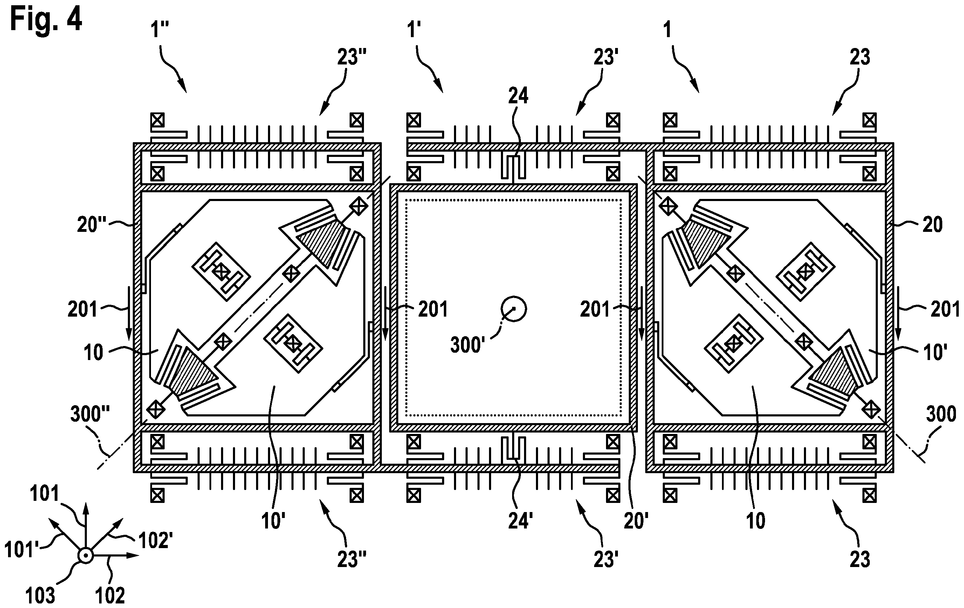

Wird die Antriebsstruktur 20 entlang der Antriebsrichtung 201 mittels einer Antriebseinrichtung 23, 23', 23" (beispielsweise in Figur 4 dargestellt) zu der Linearschwingung angetrieben, werden das erste Rotationselement 10 und das zweite Rotationselement 10' auf Grund der Kopplung mit der Antriebsstruktur 20 derart mitbewegt, dass die beiden Rotationselemente 10, 10' jeweils die erste bzw. zweite Rotationsschwingung um das erste bzw. zweite Rotationszentrum 13, 13' ausführen. Hierbei wird durch eine Linearschwingung der Antriebsstruktur 20 entlang der Antriebsrichtung 201 eine gegenphasige Antriebsmode der ersten Rotationsschwingung und der zweiten Rotationsschwingung erzeugt. Insbesondere ist die erste Rotationsschwingung bzw. die zweite Rotationsschwingung eine parallel zur Antriebsebene 100 angeordnete erste Antriebsschwingung bzw. zweite Antriebsschwingung. Bei einer Bewegung der Antriebsstruktur 20 in die durch den Pfeil 201 dargestellte Antriebsrichtung 201 führt das erste Rotationselement 10 in der gegenphasigen Antriebsmode eine erste Rotationsbewegung um das Rotationszentrum 13 aus, wobei die erste Rotationsbewegung eine durch den Pfeil 202 dargestellte Antriebsbewegung 202 ist. Ebenso führt das zweite Rotationselement 10' eine zweite Rotationsbewegung um das zweite Rotationszentrum 13' aus, wobei die zweite Rotationsbewegung eine durch Pfeil 202' dargestellte Antriebsbewegung 202' ist und gegensinnig zur ersten Rotationsbewegung 202 ist. Auf Grund einer Bewegung der Antriebsstruktur 20 in die Antriebsrichtung 201 in eine Y-Richtung 101 wird ein vom Rotationszentrum 13 in Y-Richtung 101 angeordnetes vorderes Endstück des ersten Rotationselements 10 in eine X-Richtung 102 bewegt und ein entlang der Y-Richtung 101 gegenüberliegend angeordnetes hinteres Endstück des ersten Rotationselements 10 entgegengesetzt zur X-Richtung 102 bewegt. Die Antriebsebene 100 wird hierbei durch die X-Richtung 102 und Y-Richtung 101 aufgespannt, wobei die Rotationsachse 300 hier senkrecht zur X-Richtung 102 angeordnet ist. Wird der Drehratensensor 1 mit einer Drehrate um die Rotationsachse 300 in Y-Richtung 101 - d.h. mit einer Drehrate des Drehratensensors 1 in Y-Richtung 101 im Uhrzeigersinn - beaufschlagt, bewirkt die gegenphasige Antriebsschwingung des ersten und zweiten Rotationselements 10, 10' beispielsweise eine Auslenkung des ersten Rotationselements in eine zur Antriebsebene 100 senkrechte Z-Richtung. Insbesondere wird in dem Fall der durch die Pfeile 202 bzw. 202' dargestellten Antriebsmode das vordere Ende des ersten Rotationselements 10 nach oben - d.h. in die Z-Richtung - und eine Auslenkung des hinteren Endes nach unten - d.h. in die zur Z-Richtung entgegengesetzte Richtung. Auf Grund der ersten Antriebsschwingung des ersten Rotationselements 10 wird hierbei eine erste Detektionsschwingung des ersten Rotationselements 10 um eine zur X-Richtung 102 parallele dritte Drehachse erzeugt. Entsprechend wird das zweite Rotationselement 10' zu einer zur ersten Detektionsschwingung gegensinnigen zweiten Detektionsschwingung angetrieben. Liegt eine Drehrate um die Y-Richtung 101 vor, so führt dies bei einer Bewegung einer Masse, insbesondere eines Rotationselements, 10, 10' in positiver X-Richtung 102 - d.h. in der Zeichenebene nach rechts - zu einer Corioliskraft in die positive Z-Richtung 103 - d.h. aus der Zeichenebene heraus. Hingegen erfährt eine Masse, insbesondere des Rotationselements 10, 10', welche sich in die negative X-Richtung 102 bewegt, eine Corioliskraft in die negative Z-Richtung 103. Im Falle der ersten bzw. zweiten Rotationsbewegung der Rotationselemente 10, 10' führt dies bei Vorliegen einer Drehrate um die Y-Richtung 102 zu einer Auslenkung einer Seite des Rotationselements 10, 10' nach oben - d.h. in die positive Z-Richtung 103 - und zu einer Auslenkung einer anderen Seite des Rotationselements 10, 10' nach unten - d.h. in die negative Z-Richtung. Eine solche Bewegung wird insbesondere als Detektionsbewegung bezeichnet, wobei die Detektionsbewegung eine weitere erste bzw. zweite Rotationsschwingung um eine zur X-Richtung 102 parallele Detektionsachse ist. Die Lage der Detektionsachse und/oder der ersten Drehachse des ersten Rotationselements 10 wird durch die Lage des Ankerelements 13 relativ zum Substrat bestimmt. Gleiches gilt entsprechend für das zweite Rotationselement 10'.

Weiterhin weist der Drehratensensor 1 insbesondere eine Wippenstruktur 30 und eine weitere Wippenstruktur 30' auf, wobei die Wippenstrukturen derart konfiguriert sind, dass gleichphasige Detektionsmoden der ersten Detektionsschwingung und der zweiten Detektionsschwingung unterdrückt werden. Beispielsweise können durch Störschwingungen des Drehratensensors 1 solche gleichphasigen Detektionsmoden der ersten und zweiten Detektionsschwingung angeregt werden.

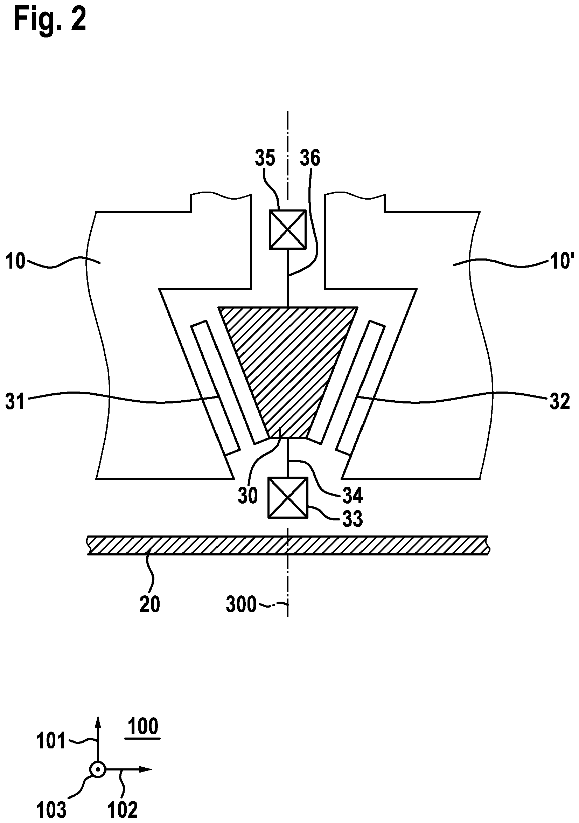

**Figur 2** zeigt schematisch beispielhaft eine Wippenstruktur einer Ausführungsform des erfindungsgemäßen Drehratensensors 1. Das erste Rotationselement und das zweite Rotationselement sind über eine Wippenstruktur 30 und eine weitere Wippenstruktur 30' miteinander gekoppelt. Die Wippenstrukturen 30 bzw. 30' bestehen insbesondere aus einer Masse, wobei die Wippenstruktur 30 bzw. weitere Wippenstruktur 30' insbesondere jeweils eine Wippendrehachse bzw. weitere Wippendrehachse aufweisen. Bevorzugt sind die Wippendrehachse und die weitere Wippendrehachse entlang der Rotationsachse 300 hintereinander angeordnet. Hier ist die Wippenstruktur 30 trapezförmig dargestellt. Weiterhin ist die Wippenstruktur 30 entlang der Wippendrehachse an einer Seite über ein Torsionselement 34 oder einen Verdrillungsbalken 34 mit einem Ankerelement 33 des Substrats verbunden. An einer entlang der Wippendrehachse der einen Seite gegenüberliegenden anderen Seite ist die Wippenstruktur 30 über ein weiteres Torsionselement 36 oder einen weiteren Verdrillungsbalken 36 mit einem weiteren Ankerelement 35 des Substrats gekoppelt. Hier ist die Wippenstruktur 30 weiterhin über ein erstes Wippen-Koppelelement 31, insbesondere eine U-Feder 31, mit dem ersten Rotationselement 10 und über ein zweites Wippen-Koppelelement 32, insbesondere eine weitere U-Feder 32, mit dem zweiten Rotationselement 10' gekoppelt. Hier wird durch die Kopplung der Wippenstruktur 30 mit den beiden Rotationselementen 10, 10' eine Bewegung, beispielsweise die Detektionsschwingung, der beiden Rotationselemente 10, 10' parallel zur Z-Richtung 103 gekoppelt. Das bedeutet beispielsweise, dass eine Bewegung des ersten Rotationselements 10 auf der linken Seite nach oben - d.h. in Z-Richtung 102 bzw. aus der Zeichenebene 100 heraus - durch die Wippenstruktur 30 eine Bewegung des zweiten Rotationselements 10' nach unten - d.h. entgegen der Z-Richtung 102 bzw. in die Zeichenebene 100 hinein - bewirkt wird. Da die beiden Rotationselemente 10, 10' in der Antriebsbewegung gegenphasig schwingen, ist auch die Detektionsbewegung gegenphasig. Durch Kopplung der beiden Rotationselemente 10, 10' über, hier zwei, an das Substrat angebundene Wippenstrukturen 30, 30' wird sichergestellt, dass nur diese gegenphasige Detektionsbewegungen ausgeführt werden kann. Die Rotationselemente 10, 10' sind somit insbesondere nur über die Ankerelemente 13, 13' und somit über das Substrat, den Antriebsrahmen 20 und die Wippenstrukturen 30, 30' miteinander gekoppelt. Insbesondere sind die beiden Rotationselemente 10, 10' nicht direkt miteinander gekoppelt - d.h. nicht direkt über lediglich ein Bauteil beispielsweise eine Feder.

Bevorzugt wird die erste Detektionsschwingung des ersten Rotationselements 10 detektiert, insbesondere kapazitiv erfasst, und mittels einer Auswerteelektronik ein erstes Drehratensignal erzeugt. Weiterhin wird die zweite Detektionsschwingung des zweiten Rotationselements 10' detektiert, insbesondere kapazitiv erfasst, und mittels der Auswerteelektronik ein zweites Drehratensignal erzeugt. Anschließend wird durch die Auswerteelektronik ein Differenzsignal aus den beiden Drehratensignalen erzeugt. Hierdurch ist es vorteilhaft ungewünschte oder störende Linearbeschleunigungen und/oder Drehratenbeschleunigungen, welche zu keiner gegenphasigen Bewegung der Rotationselemente 10, 10' führen, durch das Differenzsignal herauszufiltern.

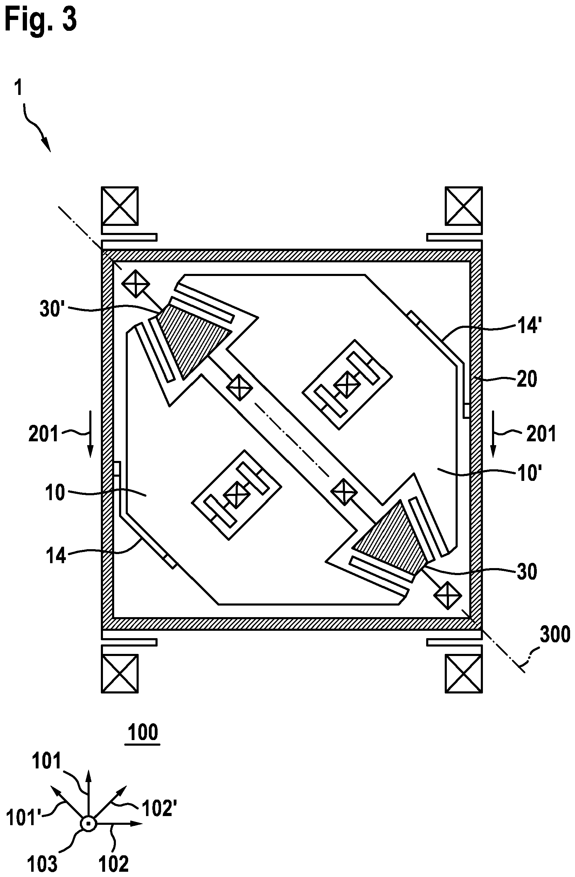

**Figur 3** zeigt schematisch beispielhaft eine Ausführungsform des erfindungsgemäßen Drehratensensors 1. Hier ist die Rotationsachse 300 des Drehratensensors 1 nicht parallel zur Antriebsrichtung 201 der Antriebsstruktur 20, sondern unter einem Scheitelwinkel, insbesondere von 45 Grad, zur Antriebsrichtung 201 der Antriebsstruktur 20 angeordnet. Eine durch die Linearschwingung hervorgerufene erste Antriebskraft der Antriebsstruktur 20 ist entlang der Antriebsrichtung 201 angeordnet und wird über Umlenkmittel 14 bzw. 14' auf eine zweite Antriebskraft parallel zur Rotationsachse 300 umgelenkt. Mittels der zweiten Antriebskraft werden die beiden Rotationselemente 10, 10' zu der ersten bzw. zweiten Rotationsschwingung, insbesondere gegensinnig zueinander, angetrieben. Somit lässt sich der erfindungsgemäße Drehratensensor mit rotatorischen Teilschwingern 10, 10' bzw. Rotationselementen 10, 10' zur Detektion einer ersten Drehrate um eine zu einer unter dem Scheitelwinkel zur Y-Richtung 101 innerhalb der Antriebsebene 100 angeordneten Y'-Richtung 101' mit einem zweiten Drehratensensor 1" zur Detektion einer zweiten Drehrate um eine zweite Rotationsachse 300" (siehe Figur 4) zusammenschließen - d.h. eine Drehratensensoranordnung bereitzustellen, welche zur Detektion mehrerer Drehraten um mehrere Rotationsachsen 300, 300" konfiguriert ist.

**Figur 4** zeigt schematisch beispielhaft eine Drehratensensoranordnung einer Ausführungsform der erfindungsgemäßen Drehratensensoren 1. Hier ist eine dreikanalige Drehratensensoranordnung mit einem ersten Drehratensensor 1, einem zweiten Drehratensensor 1' und insbesondere einem dritten Drehratensensor 1" dargestellt. Der erste Drehratensensor 1 ist zur Detektion einer ersten Drehrate um eine zur weiteren ersten Y'-Richtung 101' parallele Rotationsachse 300 konfiguriert, wobei die Y'-Richtung 101' einen Scheitelwinkel von 45 Grad ausgehend von der Y-Richtung 101 im Gegenuhrzeigersinn einschließt. Der zweite Drehratensensor 1" ist zur Detektion einer zweiten Drehrate um eine zur weiteren zweiten X-Richtung 102' parallele Rotationsachse 300" konfiguriert, wobei die X-Richtung 102' den Scheitelwinkel von 45 Grad ausgehend von der X-Richtung 102 im Gegenuhrzeigersinn einschließt. Insbesondere ist der dritte Drehratensensor 1' ist zur Detektion einer dritten Drehrate um eine zur Z-Richtung 103 parallele Rotationsachse 300' konfiguriert. Insbesondere weist jeder Drehratensensor 1, 1', 1" der drei Drehratensensoren 1, 1', 1" jeweils eine Antriebsstruktur 20, 20', 20" auf. Insbesondere sind die Antriebsstrukturen 20, 20" des ersten Drehratensensors 1 und des zweiten Drehratensensors 1" zur Ausführung einer Antriebsbewegung oder zu einer Linearschwingung entlang der gleichen Antriebsrichtung 201 beweglich angeordnet und antreibbar, wobei die Antriebsstruktur 20 des ersten Drehratensensors 1 mit der Antriebsstruktur 20" des zweiten Drehratensensors 1" gekoppelt ist. In einer alternativen Ausführungsform ist die Antriebsstruktur 20 des ersten Drehratensensors 1 mit der Antriebsstruktur 20" des zweiten Drehratensensors 1" starr gekoppelt (nicht dargestellt). Alternativ wird eine einzige Antriebsstruktur 20, 20' zum Antrieb des ersten und zweiten Drehratensensors 1, 1" angeordnet. Hier werden die Antriebsstrukturen über Antriebseinrichtungen 23, 23', 23" zu Linearschwingungen angetrieben. Weiterhin ist hier die Antriebsstruktur 20' des dritten Drehratensensors 1' mittels eines Übertragungselements 24 mit der Antriebsstruktur 20 des ersten Drehratensensors 1 und mittels eines weiteren Übertragungselements 24' mit der Antriebsstruktur 20" des zweiten Drehratensensors 1" gekoppelt.

## Patentansprüche

1. Drehratensensor (1, 1") zur Detektion einer Rotationsbewegung des Drehratensensors (1, 1") um eine Rotationsachse (300, 300"), wobei sich die Rotationsachse (300, 300") innerhalb einer Antriebsebene (100) des Drehratensensors (1, 1") erstreckt, wobei der Drehratensensor (1, 1") ein erstes Rotationselement (10), ein zweites Rotationselement (10') und eine parallel zur Antriebsebene (100) bewegbare Antriebsstruktur (20, 20") aufweist, wobei das erste Rotationselement (10) um ein erstes Rotationszentrum (13) zu einer zur Antriebsebene (100) parallelen ersten Rotationsschwingung antreibbar ist, wobei das zweite Rotationselement (10') um ein zweites Rotationszentrum (13') zu einer zur Antriebsebene (100) parallelen zweiten Rotationsschwingung antreibbar ist, wobei die Antriebsstruktur (20, 20") mit dem ersten Rotationselement (10) und mit dem zweiten Rotationselement (10') gekoppelt ist, wobei die Antriebsstruktur (20, 20") entlang einer Antriebsrichtung (201) linear beweglich angeordnet ist, wobei die Antriebsstruktur (20, 20") zur Erzeugung einer gegenphasigen Antriebsmode der ersten Rotationsschwingung und der zweiten Rotationsschwingung konfiguriert ist, wobei der Drehratensensor (1, 1") derart konfiguriert ist, dass das erste Rotationselement (10) und das zweite Rotationselement (10') über eine Wippenstruktur (30, 30') miteinander gekoppelt sind, **dadurch gekennzeichnet, dass** die Antriebsstruktur (20, 20") als ein das erste Rotationselement (10) und das zweite Rotationselement (10') vollständig umgebender Antriebsrahmen (20, 20") ausgebildet ist.

2. Drehratensensor (1, 1") nach Anspruch 1, **dadurch gekennzeichnet, dass** die Antriebsstruktur (20, 20") derart mit dem ersten Rotationselement (10) und mit dem zweiten Rotationselement (10') gekoppelt ist, dass mittels einer Linearbewegung der Antriebsstruktur (20, 20") entlang der Antriebsrichtung (201) die gegenphasige Antriebsmode der ersten Rotationsschwingung und der zweiten Rotationsschwingung erzeugt wird.

3. Drehratensensor (1, 1', 1") nach einem der vorhergehenden Ansprüche,
**dadurch gekennzeichnet, dass** das erste Rotationselement (10) mit einem ersten Ankerelement (13) des Substrats, insbesondere über ein erstes Rückstellelement (12), gekoppelt ist und das zweite Rotationselement (10') mit einem zweiten Ankerelement (13') des Substrats, insbesondere über ein zweites Rückstellelement (12'), gekoppelt ist, wobei die Antriebsstruktur (20, 20") über ein erstes Koppelelement (11, 14) mit dem ersten Rotationselement (10) gekoppelt ist, wobei die Antriebsstruktur (20, 20") über ein zweites Koppelelement (11', 14') mit dem zweiten Rotationselement (10') gekoppelt ist, wobei insbesondere das erste Rotationselement (13) im Bereich des ersten Rotationszentrums (13) eine das erste Ankerelement (13) vollständig oder teilweise umgebende erste Ausnehmung aufweist, wobei insbesondere das zweite Rotationselement (13) im Bereich des zweiten Rotationszentrums (13) eine das zweite Ankerelement (13) vollständig oder teilweise umgebende zweite Ausnehmung aufweist.

4. Drehratensensor (1, 1") nach einem der vorhergehenden Ansprüche, **dadurch gekennzeichnet, dass** die Wippenstruktur (30, 30') eine Wippendrehachse aufweist, wobei die Wippendrehachse insbesondere parallel zur Rotationsachse (300, 300") angeordnet ist.

5. Drehratensensor (1, 1") nach einem der vorhergehenden Ansprüche, **dadurch gekennzeichnet, dass** das erste Rotationselement (10) und das zweite Rotationselement (10') nur über die Antriebsstruktur (20, 20") und die Wippenstruktur (30, 30'), oder nur über ein Substrat des Drehratensensors (1, 1"), die Antriebsstruktur (20, 20") und die Wippenstruktur (30, 30') miteinander gekoppelt sind.

6. Drehratensensor (1, 1") nach einem der vorhergehenden Ansprüche, **dadurch gekennzeichnet, dass** die Antriebsrichtung (201) der Antriebsstruktur (20, 20") parallel zur Rotationsachse (300, 300") angeordnet ist oder die Antriebsrichtung (201) mit der Rotationsachse (300, 300") einen Scheitelwinkel einschließt, wobei der Scheitelwinkel ausgehend von der Rotationsachse (300, 300") in Richtung der Antriebsrichtung (201) bevorzugt zwischen 0 Grad und 90 Grad beträgt, besonders bevorzugt zwischen 30 Grad und 60 Grad beträgt, ganz besonders bevorzugt 45 Grad beträgt.

7. Drehratensensoranordnung mit mindestens zwei Drehratensensoren (1, 1") nach einem der vorhergehenden Ansprüche, **dadurch gekennzeichnet, dass** die Drehratensensoranordnung zur Detektion von mindestens zwei Drehraten um mindestens zwei unterschiedliche Rotationsachsen (300, 300") konfiguriert ist, wobei die Antriebsstrukturen (20, 20") der mindestens zwei Drehratensensoren (1, 1") miteinander gekoppelt sind.

8. Verfahren zum Betrieb eines Drehratensensors (1, 1") zur Detektion einer Rotationsbewegung des Drehratensensors (1, 1") um eine Rotationsachse (300, 300"), wobei die Rotationsachse (300, 300") innerhalb einer Antriebsebene (100) des Drehratensensors (1, 1") angeordnet wird, wobei eine Antriebsstruktur (20, 20") parallel zur Antriebsebene (100) bewegt wird, wobei ein erstes Rotationselement (10) um ein erstes Rotationszentrum (13) zu einer zur Antriebsebene (100) parallelen ersten Rotationsschwingung angetrieben wird, wobei ein zweites Rotationselement (10') um ein zweites Rotationszentrum (13') zu einer zur Antriebsebene (100) parallelen zweiten Rotationsschwingung angetrieben wird, wobei die Antriebsstruktur (20, 20") mit dem ersten Rotationselement (10) und mit dem zweiten Rotationselement (10') gekoppelt wird, wobei die Antriebsstruktur (20, 20") entlang einer Antriebsrichtung (201) linear bewegt wird, wobei mittels der Antriebsstruktur (20, 20") eine gegenphasige Antriebsmode der ersten Rotationsschwingung und der zweiten Rotationsschwingung erzeugt wird, wobei das erste Rotationselement (10) und das zweite Rotationselement (10') über eine Wippenstruktur (30, 30') miteinander gekoppelt werden, **dadurch gekennzeichnet, dass** die Antriebsstruktur (20, 20") als ein das erste Rotationselement (10) und das zweite Rotationselement (10') vollständig umgebender Antriebsrahmen (20, 20") ausgebildet ist.

9. Verfahren nach Anspruch 8, **dadurch gekennzeichnet, dass** die Antriebsstruktur (20, 20") entlang der Antriebsrichtung (201) zur Erzeugung der gegenphasigen Antriebsmode der ersten Rotationsschwingung und der zweiten Rotationsschwingung linear bewegt wird.

10. Verfahren nach einem der Ansprüche 8 oder 9, **dadurch gekennzeichnet, dass** am ersten Rotationselement (10) im Bereich des ersten Rotationszentrums (13) eine Ausnehmung zur Verankerung mit einem Substrat des Drehratensensors (1, 1") angeordnet wird, wobei am zweiten Rotationselement (10') im Bereich des zweiten Rotationszentrums (13') eine Ausnehmung zur Verankerung mit einem Substrat des Drehratensensors (1, 1") angeordnet wird.

11. Verfahren nach einem der Ansprüche 8 bis 10, **dadurch gekennzeichnet, dass** eine Wippendrehachse der Wippenstruktur (30, 30') parallel zur Rotationsachse (300, 300") angeordnet wird, wobei mittels der Wippenstruktur (30, 30') eine gegenphasige Detektionsmode einer ersten Detektionsschwingung des ersten Rotationselements (10) und einer zweiten Detektionsschwingung des zweiten Rotationselements (10') erzeugt wird.

12. Verfahren nach einem der Ansprüche 8 bis 11, **dadurch gekennzeichnet, dass** das erste Rotationselement (10) und das zweite Rotationselement (10') nur über die Antriebsstruktur (20, 20") und die Wippenstruktur (30, 30'), oder nur über ein Substrat des Drehratensensors (1, 1"), die Antriebsstruktur (20, 20") und die Wippenstruktur (30, 30') miteinander gekoppelt werden.

## Claims

1. Yaw-rate sensor (1, 1") for detecting a rotational movement of the yaw-rate sensor (1, 1") about an axis of rotation (300, 300"), the axis of rotation (300, 300") extending within a drive plane (100) of the yaw-rate sensor (1, 1"), the yaw-rate sensor (1, 1") having a first rotational element (10), a second rotational element (10') and a drive structure (20, 20") that can be moved parallel to the drive plane (100), the first rotational element (10) being driveable to carry out a first rotational oscillation parallel to the drive plane (100) about a first centre of rotation (13), the second rotational element (10') being driveable to carry out a second rotational oscillation parallel to the drive plane (100) about a second centre of rotation (13'), the drive structure (20, 20") being coupled to the first rotational element (10) and to the second rotational element (10'), the drive structure (20, 20") being arranged so as to be movable linearly along a drive direction (201), the drive structure (20, 20") being configured to generate an anti-phase drive mode of the first rotational oscillation and of the second rotational oscillation, the yaw-rate sensor (1, 1") being configured in such a way that the first rotational element (10) and the second rotational element (10') are coupled to each other via a rocker structure (30, 30')
**characterized in that** the drive structure (20, 20") is formed as a drive frame (20, 20") completely surrounding the first rotational element (10) and the second rotational element (10').

2. Yaw-rate sensor (1, 1") according to Claim 1, **characterized in that** the drive structure (20, 20") is coupled to the first rotational element (10) and to the second rotational element (10') in such a way that the anti-phase drive mode of the first rotational oscillation and of the second rotational oscillation is generated by means of a linear movement of the drive structure (20, 20") along the drive direction (201).

3. Yaw-rate sensor (1, 1', 1") according to one of the preceding claims, **characterized in that** the first rotational element (10) is coupled to a first anchor element (13) of the substrate, in particular via a first restoring element (12), and the second rotational element (10') is coupled to a second anchor element (13') of the substrate, in particular via a second restoring element (12'), the drive structure (20, 20") being coupled to the first rotational element (10) via a first coupling element (11, 14), the drive structure (20, 20") being couple to the second rotational element (10') via a second coupling element (11', 14'), in particular the first rotational element (13) having a first recess completely or partly surrounding the first anchor element (13) in the region of the first centre of rotation (13), in particular the second rotational element (13) having a second recess completely or partly surrounding the second anchor element (13) in the region of the second centre of rotation (13).

4. Yaw-rate sensor (1, 1") according to one of the preceding claims, **characterized in that** the rocker structure (30, 30') has a rocker axis of rotation, the rocker axis of rotation being in particular arranged parallel to the axis of rotation (300, 300").

5. Yaw-rate sensor (1, 1") according to one of the preceding claims, **characterized in that** the first rotational element (10) and the second rotational element (10') are coupled to each other only via the drive structure (20, 20") and the rocker structure (30, 30'), or only via a substrate of the yaw-rate sensor (1, 1"), the drive structure (20, 20") and the rocker structure (30, 30').

6. Yaw-rate sensor (1, 1") according to one of the preceding claims, **characterized in that** the drive direction (201) of the drive structure (20, 20") is arranged parallel to the axis of rotation (300, 300"), or the drive direction (201) encloses a vertex angle with the axis of rotation (300, 300"), starting from the axis of rotation (300, 300"), the vertex angle being preferably between 0° and 90°, being particularly preferably between 30° and 60°, being very particularly preferably 45°, in the direction of the drive direction (201).

7. Yaw-rate sensor assembly comprising at least two yaw-rate sensors (1, 1") according to one of the preceding claims, **characterized in that** the yaw-rate sensor assembly is configured to detect at least two yaw rates about at least two different axes of rotation (300, 300"), the drive structures (20, 20") of the at least two yaw-rate sensors (1, 1") being coupled to each other.

8. Method for operating a yaw-rate sensor (1, 1") for detecting a rotational movement of the yaw-rate sensor (1, 1") about an axis of rotation (300, 300"), the axis of rotation (300, 300") being arranged within a drive plane (100) of the yaw-rate sensor (1, 1"), a drive structure (20, 20") being moved parallel to the drive plane (100), a first rotational element (10) being driven to carry out a first rotational oscillation parallel to the drive plane (100) about a first centre of rotation (13), a second rotational element (10') being driven to carry out a second rotational oscillation parallel to the drive plane (100) about a second centre of rotation (13'), the drive structure (20, 20") being coupled to the first rotational element (10) and to the second rotational element (10'), the drive structure (20, 20") being moved linearly along a drive direction (201), an anti-phase drive mode of the first rotational oscillation and of the second rotational oscillation being generated by means of the drive structure (20, 20"), the first rotational element (10) and the second rotational element (10') being coupled to each other via a rocker structure (30, 30'),
**characterized in that** the drive structure (20, 20") is formed as a drive frame (20, 20") completely surrounding the first rotational element (10) and the second rotational element (10').

9. Method according to Claim 8, **characterized in that** the drive structure (20, 20") is moved linearly along the drive direction (201) to generate the anti-phase drive mode of the first rotational oscillation and of the second rotational oscillation.

10. Method according to either of Claims 8 and 9, **characterized in that** a recess for anchoring to a substrate of the yaw-rate sensor (1, 1") is arranged on the first rotational element (10) in the region of the first centre of rotation (13), a recess for anchoring to a substrate of the yaw-rate sensor (1, 1") being arranged on the second rotational element (10') in the region of the second centre of rotation (13').

11. Method according to one of Claims 8 to 10, **characterized in that** a rocker axis of rotation of the rocker structure (30, 30') is arranged parallel to the axis of rotation (300, 300"), an anti-phase detection mode of a first detection oscillation of the first rotational element (10) and of a second detection oscillation of the second rotational element (10') being generated by means of the rocker structure (30, 30').

12. Method according to one of Claims 8 to 11, **characterized in that** the first rotational element (10) and the second rotational element (10') are coupled to each other only via the drive structure (20, 20") and the rocker structure (30, 30'), or only via a substrate of the yaw-rate sensor (1, 1"), the drive structure (20, 20") and the rocker structure (30, 30').

## Revendications

1. Capteur (1, 1") de vitesse de rotation pour la détection d'un déplacement de rotation du capteur (1, 1") de vitesse de rotation autour d'un axe de rotation (300, 300"),
l'axe de rotation (300, 300") s'étendant à l'intérieur d'un plan d'entraînement (100) du capteur (1, 1") de vitesse de rotation,
le capteur (1, 1") de vitesse de rotation présentant un premier élément de rotation (10), un deuxième élément de rotation (10') et une structure d'entraînement (20, 20") apte à se déplacer parallèlement au plan d'entraînement (100),
le premier élément de rotation (10) pouvant être entraîné en une première rotation oscillante autour d'un premier centre de rotation (13) et parallèlement à un plan d'entraînement (100),
le deuxième élément de rotation (10') pouvant être entraîné en une deuxième rotation oscillante autour d'un deuxième centre de rotation (13') et parallèlement au plan d'entraînement (100),
la structure d'entraînement (20, 20") étant accouplée au premier élément de rotation (10) et au deuxième élément de rotation (10'),
la structure d'entraînement (20, 20") étant disposée à déplacement linéaire le long d'une direction d'entraînement (201),
la structure d'entraînement (20, 20") étant configurée pour former un mode d'entraînement en opposition de phase entre la première rotation oscillante et la deuxième rotation oscillante,
le capteur (1, 1") de vitesse de rotation étant configuré de telle sorte que le premier élément de rotation (10) et le deuxième élément de rotation (10') soient accouplés l'un à l'autre par l'intermédiaire d'une structure en bascule (30, 30'),
**caractérisé en ce que**
la structure d'entraînement (20, 20") est configurée comme bâti d'entraînement (20, 20") qui entoure complètement le premier élément de rotation (10) et le deuxième élément de rotation (10').

2. Capteur (1, 1") de vitesse de rotation selon la revendication 1, **caractérisé en ce que** la structure d'entraînement (20, 20") est accouplée au premier élément de rotation (10) et au deuxième élément de rotation (10') de telle sorte que le mode d'entraînement en opposition de phase entre la première rotation oscillante et la deuxième rotation oscillante soit formé au moyen d'un déplacement linéaire de la structure d'entraînement (20, 20") le long de la direction d'entraînement (201).

3. Capteur (1, 1', 1") de vitesse de rotation selon l'une des revendications précédentes, **caractérisé en ce que** le premier élément de rotation (10) est accouplé à un premier élément d'ancrage (13) du substrat, en particulier par un premier élément de rappel (12), et **en ce que** le deuxième élément de rotation (10') est accouplé à un deuxième élément d'ancrage (13') du substrat, en particulier par un deuxième élément de rappel (12'), la structure d'entraînement (20, 20") étant accouplée au premier élément de rotation (10) par un premier élément d'accouplement (11, 14), la structure d'entraînement (20, 20") étant accouplée au deuxième élément de rotation (10') par un deuxième élément d'accouplement (11', 14'), le premier élément de rotation (13) présentant au niveau du centre de rotation (13) une premier découpe qui entoure complètement ou partiellement le premier élément d'ancrage (13), et en particulier le deuxième élément de rotation (13) présentant au niveau du deuxième centre de rotation (13) une deuxième découpe qui entoure complètement ou partiellement le deuxième élément d'ancrage (13).

4. Capteur (1, 1") de vitesse de rotation selon l'une des revendications précédentes, **caractérisé en ce que** la structure (30, 30') en bascule présente un axe de rotation de bascule, l'arbre de rotation de la bascule étant disposé en particulier parallèlement à l'axe de rotation (300, 300").

5. Capteur (1, 1") de vitesse de rotation selon l'une des revendications précédentes, **caractérisé en ce que** le premier élément de rotation (10) et le deuxième élément de rotation (10') sont accouplés l'un à l'autre uniquement par la structure d'entraînement (20, 20") et la structure (30, 30') en bascule ou uniquement par un substrat du capteur (1, 1") de vitesse de rotation, la structure d'entraînement (20, 20") et la structure (30, 30') en bascule.

6. Capteur (1, 1") de vitesse de rotation selon l'une des revendications précédentes, **caractérisé en ce que** la direction d'entraînement (201) de la structure d'entraînement (20, 20") est parallèle à l'axe de rotation (300, 300") ou la direction d'entraînement (201) forme avec l'axe de rotation (300, 300") un angle aigu, l'angle aigu étant de préférence compris entre 0 degré et 90 degrés de façon particulièrement préférable entre 30 degrés et 60 degrés, et de façon tout particulièrement préférable de 45 degrés, en partant de l'axe de rotation (300, 300") dans la direction d'entraînement (201).

7. Ensemble de capteur de vitesse de rotation présentant au moins deux capteurs (1, 1") de vitesse de rotation selon l'une des revendications précédentes, **caractérisé en ce que** l'ensemble de capteur de vitesse de rotation est configuré pour détecter au moins deux vitesses de rotation autour d'au moins deux axes de rotation (300, 300") différents, les structures d'entraînement (20, 20") des deux ou plusieurs capteurs (1, 1") de vitesse de rotation étant accouplés les uns aux autres.

8. Procédé de conduite d'un capteur (1, 1") de vitesse de rotation en vue de la détection d'un déplacement de rotation du capteur (1, 1") de vitesse de rotation autour d'un axe de rotation (300, 300"),
l'axe de rotation (300, 300") étant disposé à l'intérieur d'un plan d'entraînement (100) du capteur (1, 1") de vitesse de rotation,
une structure d'entraînement (20, 20") étant déplacée parallèlement au plan d'entraînement (100),
un premier élément de rotation (10) pouvant être entraîné en une première rotation oscillante autour d'un premier centre de rotation (13) et parallèlement à un plan d'entraînement (100),
un deuxième élément de rotation (10') pouvant être entraîné en une deuxième rotation oscillante autour d'un deuxième centre de rotation (13') et parallèlement au plan d'entraînement (100),
la structure d'entraînement (20, 20") étant accouplée au premier élément de rotation (10) et au deuxième élément de rotation (10'),
la structure d'entraînement (20, 20") étant disposée à déplacement linéaire le long d'une direction d'entraînement (201),
la structure d'entraînement (20, 20") étant configurée pour former un mode d'entraînement en opposition de phase entre la première rotation oscillante et la deuxième rotation oscillante,
le premier élément de rotation (10) et le deuxième élément de rotation (10') étant accouplés l'un à l'autre par l'intermédiaire d'une structure en bascule (30, 30'),
**caractérisé en ce que**
la structure d'entraînement (20, 20") est configurée comme bâti d'entraînement (20, 20") qui entoure complètement le premier élément de rotation (10) et le deuxième élément de rotation (10').

9. Procédé selon la revendication 8, **caractérisé en ce que** la structure d'entraînement (20, 20") est déplacée linéairement dans la direction d'entraînement (201) en vue de former le mode d'entraînement en opposition de phase entre la première rotation oscillante et la deuxième rotation oscillante.

10. Procédé selon l'une des revendications 8 ou 9, **caractérisé en ce qu'**une découpe d'ancrage à un substrat du capteur (1, 1") de vitesse de rotation est disposée sur le premier élément de rotation (10) au niveau du premier centre de rotation (13), une découpe d'ancrage à un substrat du capteur (1, 1") de vitesse de rotation étant disposée sur le deuxième élément de rotation (10') au niveau du deuxième centre de rotation (13').

11. Procédé selon l'une des revendications 8 à 10, **caractérisé en ce que** l'axe de rotation de la structure (30, 30') en bascule est disposé parallèlement à l'axe de rotation (300, 300''), un mode de détection en opposition de phase d'une première oscillation de détection du premier élément de rotation (10) et d'une deuxième oscillation de détection du deuxième élément de rotation (10') étant formé au moyen de la structure (30, 30') en bascule.

12. Procédé selon l'une des revendications 8 à 11, **caractérisé en ce que** le premier élément de rotation (10) et le deuxième élément de rotation (10') sont accouplés l'un à l'autre uniquement par la structure d'entraînement (20, 20") et la structure (30, 30') en bascule ou uniquement par un substrat du capteur (1, 1") de vitesse de rotation, la structure d'entraînement (20, 20") et la structure (30, 30') en bascule.
